# EUROPÄISCHE PATENTSCHRIFT

(11) **EP 2 116 378 B1**
(45) Veröffentlichungstag und Bekanntmachung des Hinweises auf die Patenterteilung: **21.10.2015**
(21) Anmeldenummer: 09159602.3
(22) Anmeldetag: 07.05.2009
(51) Int. Cl.: B41F 33/00, G01M 13/00

(54) **Verfahren zum Betreiben einer Druckmaschine**
Method for operating a printing press
Procédé destiné au fonctionnement d'une presse

(30) Priorität: 08.05.2008 DE 102008022634
(43) Veröffentlichungstag der Anmeldung: 11.11.2009
(73) Patentinhaber: manroland web systems GmbH, 86153 Augsburg (DE)
(72) Erfinder: Singler, Josef, 86637 Binswangen (DE); Mittelhammer, Harald, 86169 Augsburg (DE); Knauer, Peter, 86692 Münster/Lech (DE)

(56) Entgegenhaltungen:
- EP-A- 1 077 372
- EP-A2- 0 829 352
- DE-A1- 10 125 292
- DE-A1- 10 228 389
- DE-A1-102007 026 569

## Beschreibung

Die Erfindung betrifft ein Verfahren zum Betreiben einer Druckmaschine.

Eine Druckmaschine, wie z. B. eine Rollendruckmaschine, verfügt über eine Vielzahl von Aggregaten, die zum Bedrucken eines Bedruckstoffs mit einer definierten Maschinengeschwindigkeit betrieben werden. Bei diesen Aggregaten handelt es sich z. B. um Druckwerke umfassende Druckeinheiten, Falzapparate sowie gegebenenfalls Trocknungseinrichtungen.

DE 101 25 292 A1 betrifft Walzen und Zylinder mit dauerhafter Kennung sowie Vorrichtungen und Verfahren, die von dieser dauerhaften Kennung Gebrauch machen und die Erfassung von Betriebsparametern von Walzen und Zylindern in technischen Maschinen, Anlagen und Vorrichtungen ermöglichen. Mittels ausgewählter Sensoren werden chemische oder physikalische Eigenschaften ermittelt, wobei die bereit gestellte Information dazu genutzt werden kann, den Betrieb der Walzen und Zylinder und anderer Komponenten in einer technischen Maschine, Anlage oder Vorrichtung gezielt und wahlweise auch automatisiert zu steuern. Zudem ist es möglich, eventuelle Ausfallerscheinungen vorherzusehen und durch den rechtzeitigen Austausch von Walzen oder Zylindern unvorhergesehene Stillstandszeiten zu vermeiden.

DE 102 28 389 B4 offenbart einen Schwingungssensor zur Zustandüberwachung von rotierenden Bauteilen oder Lagern wobei eine Auswerteelektronik und eine Signalaufbereitungseinrichtung vorgesehen sind, welche die vom Sensor erfassten Signale mit Hilfe einer Signalanalyse und eines Diagnosealgorithmus in einen den Zustand des überwachten Bauteils oder Lagers wiedergebenden Zustandswert umwandeln.

Aus der EP 0 829 352 A2 ist ein Verfahren zum Betreiben einer Druckmaschine bekannt, wobei mit Hilfe mindestens eines Schwingungssensors ein Schwingungsbild der Druckmaschine überwacht wird.

An mit einer hohen Maschinengeschwindigkeit betriebenen Offset-Druckwerken, die über einen Formzylinder, einen Übertragungszylinder, ein Farbwerk sowie vorzugsweise ein Feuchtwerk verfügen, können sich in Abhängigkeit eines sogenannten Schlankheitsgrads von Zylindern bzw. Walzen der Druckwerke an den Zylindern bzw. Walzen thermische Deformationen ausbilden, die zu Rundlauffehlern führen. Die Rundlauffehler können sich durch physikalische Effekte, wie z. B. Wärmedehnungen der Zylinder bzw. Walzen, und durch Oberflächeneigenschaften der Zylinder bzw. Walzen soweit verstärken, dass die betroffenen Baugruppen sowie angrenzende Baugruppen beschädigt werden.

Bislang ist es nicht möglich, den Beginn bzw. das Auftreten von thermisch bedingten Deformationen an Baugruppen von Druckmaschinenaggregaten, insbesondere an Zylindern bzw. Walzen von Druckwerken, eindeutig vorherzusagen oder zu berechnen, sodass es nicht möglich ist, durch thermisch bedingte Deformationen verursachte Bauteilbeschädigungen sicher auszuschließen.

Hiervon ausgehend liegt der vorliegenden Erfindung die Aufgabe zugrunde, ein neuartiges Verfahren zum Betreiben einer Druckmaschine zu schaffen, mit Hilfe dessen durch thermische Deformationen bedingte Bauteilbeschädigungen ausgeschlossen werden können. Diese Aufgabe wird durch ein Verfahren zum Betreiben einer Druckmaschine gemäß Anspruch 1 gelöst.

Bevorzugte Weiterbildungen der Erfindung ergeben sich aus der nachfolgenden Beschreibung. Ausführungsbeispiele der Erfindung werden, ohne hierauf beschränkt zu sein, nachfolgend näher erläutert.

Die hier vorliegende Erfindung betrifft ein Verfahren zum Betreiben einer Druckmaschine, nämlich einer als Illustrationsdruckmaschine ausgebildeten Offset-Rollendruckmaschine.

Zum Bedrucken eines bahnförmigen Bedruckstoffs wird derselbe durch Aggregate der Druckmaschine bewegt, wobei zum Bedrucken die Aggregate der Druckmaschine mit einer definierten Maschinengeschwindigkeit betrieben werden. Bei den Aggregaten der Druckmaschine, die mit der definierten Maschinengeschwindigkeit betrieben werden, handelt es sich insbesondere um Druckeinheiten, die jeweils mindestens ein Druckwerk umfassen.

Im Sinne der hier vorliegenden Erfindung wird mit Hilfe eines einzigen Schwingungssensors ein Schwingungsbild der Druckmaschine überwacht und hierbei ein Ist-Schwingungsbild ermittelt. Dieses ermittelte Ist-Schwingungsbild wird mit einem vorgegebenen Soll-Schwingungsbild verglichen, wobei dann, wenn das ermittelte Ist-Schwingungsbild vom vorgegebenen Soll-Schwingungsbild um einen vorgegebenen Grenzwert abweicht, auf eine unzulässige thermische Deformation mindestens einer Baugruppe mindestens eines Druckmaschinenaggregats geschlossen wird.

Es liegt dabei im Sinne der hier vorliegenden Erfindung, dass dann, wenn auf eine unzulässige thermische Deformation mindestens einer Baugruppe mindestens eines Druckmaschinenaggregats geschlossen wird, die Maschinengeschwindigkeit reduziert wird, nämlich derart, dass bei reduzierter Maschinengeschwindigkeit sich thermische Deformationen an Baugruppen der Druckmaschinenaggregate zurückbilden können.

Die Maschinengeschwindigkeit wird so lange reduziert, so lange das Ist-Schwingungsbild vom Soll-Schwingungsbild um einen vorgegebenen Grenzwert abweicht und anschließend hieran wird wieder die Druckmaschinengeschwindigkeit erhöht.

Das erfindungsgemäße Verfahren dient insbesondere der Detektion von unzulässigen thermischen Verformungen bzw. unzulässigen thermischen Deformationen an Zylindern bzw. Walzen von Druckwerken einer Offset-Rollendruckmaschine, nämlich an solchen Druckwerken einer Offset-Rollendruckmaschine, die schlanke Zylinder bzw. Walzen aufweisen und/oder an Druckwerken, an denen Zylinder bzw. Walzen mit sehr hohen Drehzahlen betrieben werden. Schlanke Zylinder bzw. Walzen verfügen über eine große axiale Erstreckung jedoch einen geringen Durchmesser.

Hierbei wird dann mit Hilfe eines einzigen, einem Druckwerk zugeordneten Schwingungssensors ein Ist-Schwingungsbild erfasst, wobei dass ermittelte Ist-Schwingungsbild mit einem vorgegebenem Soll-Schwingungsbild verglichen wird, und wobei dann, wenn das Ist-Schwingungsbild von dem vorgegebenen Soll-Schwingungsbild um einen vorgegebenen Grenzwert abweicht, auf eine unzulässige thermische Deformation mindestens eines Zylinders bzw. mindestens einer Walze mindestens eines solchen Druckwerks geschlossen wird.

Dabei wird die Ist-Schwingungsamplitude des Ist-Schwingungsbilds mit der Soll-Schwingungsamplitude des Soll-Schwingungsbilds verglichen, da bei Auftreten von thermisch bedingten Deformationen an Zylindern bzw. Walzen eines Offset-Druckwerks infolge von Rundlauffehlern der rotierenden Zylindern bzw. Walzen Schwingungsamplituden ansteigen. Ist die Ist-Schwingungsamplitude um einen vorgegebenen Grenzwert größer als die Soll-Schwingungsamplitude, so kann auf eine unzulässige thermische Deformation an Zylindern bzw. Walzen mindestens eines Druckwerks einer Druckmaschine geschlossen werden.

Wie bereits ausgeführt, wird dann die Maschinengeschwindigkeit reduziert, sodass sich thermische Deformationen an den Zylindern bzw. Walzen der Druckwerke zurückbilden können.

Das erfindungsgemäße Verfahren kommt an einer als Illustrationsdruckmaschine ausgebildeten Offset-Rollendruckmaschine zum Einsatz, die über einen horizontalen Bahnlauf einer zu bedruckenden Bedruckstoffbahn verfügt. Es ist möglich, mit Hilfe eines einzigen Schwingungssensors, der einem Druckwerk der Illustrationsdruckmaschine zugeordnet ist, ein alle Druckwerke umfassendes Ist-Schwingungsbild der Illustrationsdruckmaschine zu erfassen.

Dieses Ist-Schwingungsbild wird dann wiederum mit einem vorgegebenen Soll-Schwingungsbild verglichen, wobei dann, wenn das Ist-Schwingungsbild vom vorgegebenen Soll-Schwingungsbild um einen vorgegebenen Grenzwert abweicht, auf eine unzulässige thermische Deformation mindestens eines Zylinders bzw. mindestens einer Walze mindestens eines Druckwerks der Illustrationsdruckmaschine geschlossen wird.

Durch vorhandene Verbindungstraversen zwischen den einzelnen Druckwerken übertragen sich in einem Druckwerk entstehende Schwingungen auf die anderen Druckwerke der Illustrationsdruckmaschine, sodass es ausreichend ist, einem einzigen Druckwerk einen Schwingungssensor zuzuordnen, um ein alle Druckwerke umfassendes Ist-Schwingungsbild zu ermitteln.

## Patentansprüche

1. Verfahren zum Betreiben einer Druckmaschine, nämlich einer Illustrationsdruckmaschine mit einem horizontalen Bahnlauf einer zu bedruckenden Bedruckstoffbahn, wobei zum Bedrucken eines Bedruckstoffs Aggregate der Druckmaschine mit einer definierten Maschinengeschwindigkeit betrieben werden, wobei ein Schwingungsbild der Druckmaschine überwacht und hierbei ein Ist-Schwingungsbild ermittelt wird, wobei das Ist-Schwingungsbild mit einem vorgegeben Soll-Schwingungsbild verglichen wird, wobei mit Hilfe eines einzigen Schwingungssensors, der einem Druckwerk der Illustrationsdruckmaschine zugeordnet ist, ein alle Druckwerke umfassende Ist-Schwingungsbild, nämlich eine Ist-Amplitude, der Illustrationsdruckmaschine erfasst wird, und wobei dann, wenn das Ist-Schwingungsbild, nämlich die Ist-Amplitude, von dem Soll-Schwingungsbild, nämlich einer Soll-Amplitude, um einen vorgegebenen Grenzwert abweicht, die Maschinengeschwindigkeit solange reduziert wird, solange das Ist-Schwingungsbild, nämlich die Ist-Amplitude, von dem vorgegebenem Soll-Schwingungsbild, nämlich der Soll-Amplitude, um einen vorgegebenen Grenzwert abweicht, und wobei anschließend die Maschinengeschwindigkeit wieder erhöht wird.

## Claims

1. A method for operating a printing press, namely an illustration printing press with a horizontal web run of a substrate web to be printed, wherein for printing a substrate units of the printing press are operated with a defined machine speed, wherein a vibration pattern of the printing press is monitored and in the process an actual vibration pattern is determined, wherein the actual vibration pattern is compared with a default vibration pattern, wherein with the help of a single vibration sensor, which is assigned to a printing couple of the illustration printing press, an actual vibration pattern comprising all printing couples, namely an actual amplitude, of the illustration printing press is detected, and wherein in particular when the actual vibration pattern, namely the actual amplitude, deviates from the default vibration pattern, namely a default amplitude, by a default limit value, the machine speed is reduced until the actual vibration pattern, namely the actual amplitude deviates from the default vibration pattern, namely the default amplitude, by a default limit value, and wherein the machine speed is subsequently increased again.

## Revendications

1. Procédé d'utilisation d'une machine d'impression, à savoir d'une machine d'impression d'illustration, comprenant une course de bande horizontale d'une bande de support d'impression à imprimer, dans lequel, pour imprimer une bande de support d'impression, des sous-ensembles de la machine d'impression sont utilisés à une vitesse de machine définie, un profil de vibration de la machine d'impression étant surveillé et un profil de vibration réel étant alors déterminé, le profil de vibration réel étant comparé à un profil de vibration théorique, sachant que, à l'aide d'un seul capteur de vibration qui est associé à un groupe d'impression de la machine d'impression d'illustration, un profil de vibration recouvrant tous les groupes d'impression, à savoir une amplitude réelle de la machine d'impression d'illustration est détecté et que, si le profil de vibration réel, à savoir l'amplitude réelle, diffère du profil de vibration théorique, à savoir d'une amplitude théorique, à raison d'une valeur limite prédéfinie, la vitesse de la machine est réduite tant que le profil de vibration théorique, à savoir l'amplitude réelle, diffère du profil de vibration théorique prédéfini, à savoir de l'amplitude théorique, à raison d'une valeur limite prédéfinie et que la vitesse de la machine est ensuite de nouveau augmentée.
